# EUROPEAN PATENT SPECIFICATION

(11) **EP 2 927 120 B1**
(45) Date of publication and mention of the grant of the patent: **30.10.2019**
(21) Application number: 15153290.0
(22) Date of filing: 30.01.2015
(51) Int. Cl.: B64C 27/28, B64C 27/52

(54) **Compliant wing control for aircraft**
Flexible Flügel-Steuerung für Flugzeuge
Commande d'une aile souple pour aéronef

(30) Priority: 01.04.2014 US 201414242370
(43) Date of publication of application: 07.10.2015
(73) Proprietor: Sikorsky Aircraft Corporation, Stratford, CT 06615 (US)
(72) Inventor: Scott, Mark W., Bethany, CT Connecticut 06524 (US)
(74) Representative: Schmitt-Nilson Schraud Waibel Wohlfrom Patentanwälte Partnerschaft mbB

(56) References cited:
- WO-A1-2006/022654
- US-A- 3 514 052
- Anonymous: "V22-Osprey", , 19 September 2013 (2013-09-19), XP55203697, Retrieved from the Internet: URL:https://web.archive.org/web/2013091900 5329/http://www.meriweather.com/flightdeck /cutaways/v22.html [retrieved on 2015-07-21]
- "TILTABLE-WING, TILTABLE-ROTOR AIRCRAFT", NTIS TECH NOTES, US DEPARTMENT OF COMMERCE. SPRINGFIELD, VA, US, no. 5, 1 May 1986 (1986-05-01), page 537, XP002023246, ISSN: 0889-8464
- Michael Rutkowski ET AL: "Rotor Design Options for Improving V-22 Whirl-Mode Stability", , 11 June 2002 (2002-06-11), XP055203644, Retrieved from the Internet: URL:http://ntrs.nasa.gov/search.jsp?R=2002 0038574 [retrieved on 2015-07-21]

## Description

The subject matter disclosed herein relates to tilt wing aircraft. More specifically, the present disclosure relates to tilt wing aircraft having cyclic rotor control.

Tilt wing aircraft are rotor-driven aircraft in which the wings and rotors mounted at the wings are rotatable so that the aircraft can transition between conventional wing-borne flight, also referred to as airplane mode, and rotor-borne flight, also referred to as helicopter mode. Such aircraft have increased flexibility over many other aircraft in that they air capable of vertical takeoff and/or landing and have increased maneuverability due to their ability to operate in both airplane mode and helicopter mode. When executing certain operational maneuvers, such as rotating the aircraft about a yaw axis in helicopter mode, or rotating the aircraft about a roll axis in airplane mode, rotor cyclic pitch control is utilized to execute the maneuver. Rotor cyclic pitch control tilts a rotor plane of rotation, or tip path plane (TPP), changing the angle of attack of the rotor.

A typical tilt wing aircraft has two rotors, one located at each wing. To execute a yaw maneuver in hover mode, cyclic pitch of a first rotor is changed in a first direction, while cyclic pitch of a second rotor is changed in a second direction opposite the first direction. Similarly opposite cyclic pitch changes are made in airplane mode to execute a roll maneuver. The wing of the tilt wing aircraft is typically configured to be torsionally stiff, to resist rotor forces acting on it. During maneuvers such as those described above, the cyclic pitch change of the rotor results in an increased angle of attack from the rotor wake on the wing, producing forces resistive to the maneuver. The forces increase the time necessary to complete the maneuvers.

In one embodiment, an aircraft includes a fuselage, and a wing extending from each lateral side of the fuselage. A rotor is secured to each wing; the rotor having a rotor tip path plane defined by rotation of the rotor about a rotor axis of rotation. When the rotor tip path plane is changed relative to the rotor axis of rotation, the wing twists in the direction of the rotor tilt to reduce an angle of attack of the wing relative to a rotor wake of the rotor.

Additionally or alternatively, in this or other embodiments, a first rotor tip path plane of a first wing is changed in a first direction and a second rotor tip path plane of a second wing is changed in a second direction.

Additionally or alternatively, in this or other embodiments, a first wing twists in an opposite direction to a second wing.

An amount of wing twist is communicated to a flight control system and the flight control system adjusts the rotor tip path plane change based on the amount of wing twist.

Additionally or alternatively, in this or other embodiments, the twist of the wing is passively activated.

Additionally or alternatively, in this or other embodiments, rotation of the rotor is driven by an engine secured to the wing and operably connected to the rotor.

Each wing is rotatable relative to the fuselage and each wing is rotatably fixed relative to the fuselage.

In another embodiment, a method of operating an aircraft includes changing a rotor tip path plane orientation relative to an axis of rotation of the rotor; the rotor secured to a wing of the tilt wing aircraft. The wing is twisted to reduce an angle of attack of the wing relative to a rotor wake of the rotor. The wing is twisted in a same direction as the rotor tip path plane change.

Additionally or alternatively, in this or other embodiments, a first rotor tip path plane of a first wing is changed in a first direction and a second rotor tip path plane of a second wing is changed in a second direction.

Additionally or alternatively, in this or other embodiments, a first wing twists in an opposite direction to a second wing.

An amount of wing twist is communicated to a flight control system and the flight control system adjusts the rotor tip path plane change based on the amount of wing twist. Additionally or alternatively, in this or other embodiments, the twist of the wing is passively activated.

These and other advantages and features will become more apparent from the following description taken in conjunction with the drawings.

The subject matter, which is regarded as the invention, is pointed out and distinctly claimed in the claims at the conclusion of the specification. The foregoing and other features, and advantages of the invention are apparent from the following detailed description taken in conjunction with the accompanying drawings in which:
FIG. 1 is a side view of an embodiment of a tilt wing aircraft;
FIG. 2 is a view looking aft of an embodiment of a tilt wing aircraft in airplane mode;
FIG. 3 is a plan view of an embodiment of a tilt wing aircraft in helicopter mode;
FIG. 4 is a first side view of an embodiment of a tilt wing aircraft in helicopter mode;
FIG. 5 is a second side view of an embodiment of a tilt wing aircraft in helicopter mode;
FIG. 6 is a first side view of an embodiment of a tilt wing aircraft in airplane mode; and
FIG. 7 is a second side view of an embodiment of a tilt wing aircraft in airplane mode.

The detailed description explains embodiments of the invention, together with advantages and features, by way of example with reference to the drawings.

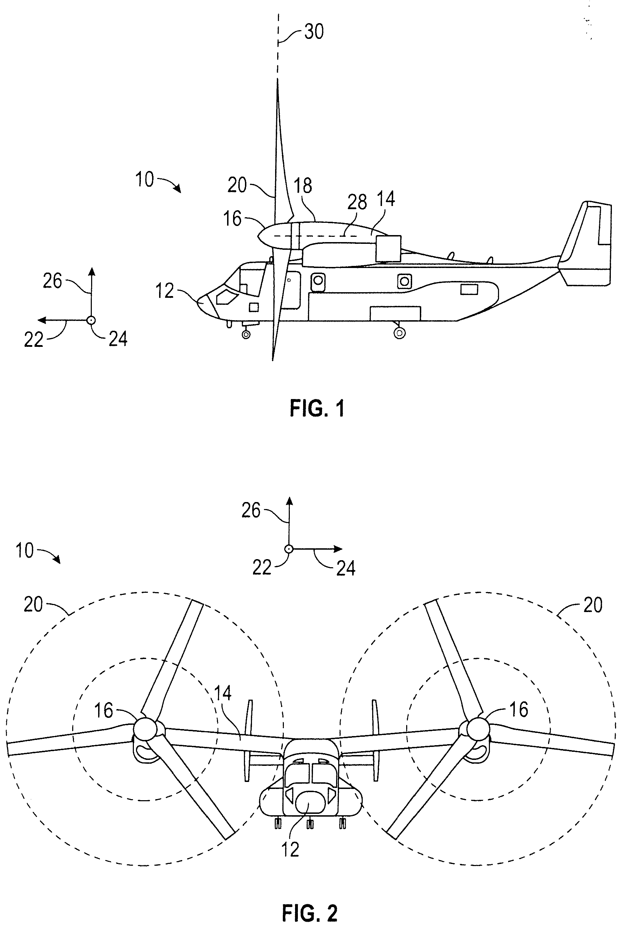

Shown in FIGs. 1 and 2 is an embodiment of a tilt wing aircraft 10. The aircraft 10 includes a fuselage 12 with a wing 14 extending from each lateral side of the fuselage 12. Each wing 14 includes and engine 16 affixed thereto, in some embodiments contained in a nacelle 18. The engine 16 drives rotation of a rotor 20 to provide thrust and, in hover mode, lift for the aircraft 10. While the figures and description herein refer to an aircraft 10 having two engines 16, one skilled in the art will appreciate that the invention may also be applied to aircraft having other numbers of engines, for example, four engines with two on each wing. As will be referenced throughout this disclosure, the aircraft 10 has a roll axis 22 extending longitudinally along the aircraft 10, a pitch axis 24 extending laterally across the aircraft 10 through the wings 14 and perpendicular to the roll axis 22, and a yaw axis 26 extending through an intersection of the pitch axis 24 and the roll axis 22, and perpendicular to both the pitch axis 24 and the roll axis 22.

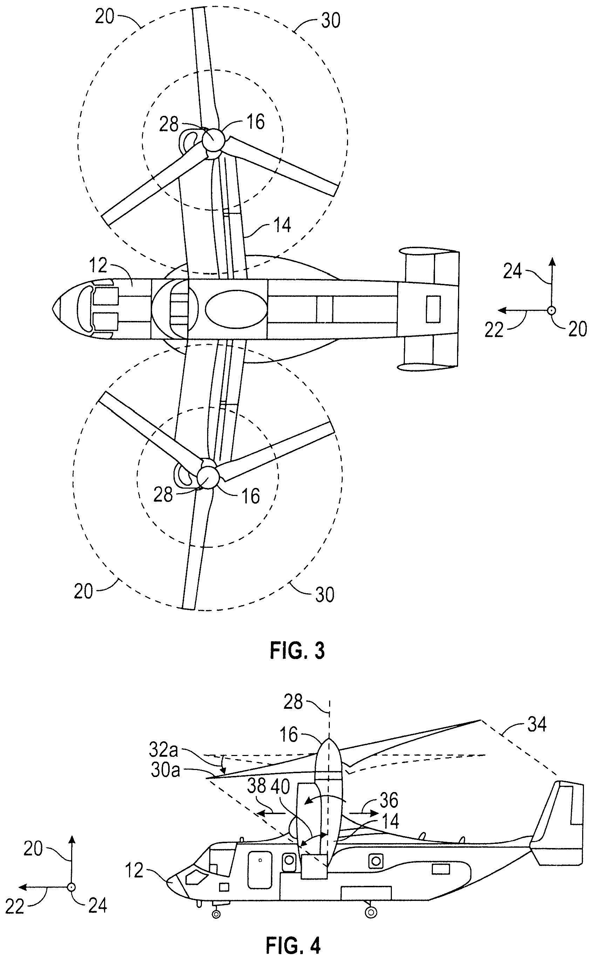

The wings 14 are configured to rotate relative to the fuselage 12. In some embodiments the rotation is about the pitch axis 24. The wings 14 rotate to transition the aircraft from conventional airplane mode, shown in FIGs. 1 and 2, to hover mode, shown in FIG. 3 and from hover mode to airplane mode. In airplane mode, a rotor axis of rotation 28 is substantially parallel to the roll axis 22 during normal forward flight while in hover mode the rotor axis of rotation 28 is substantially parallel to the yaw axis 26.

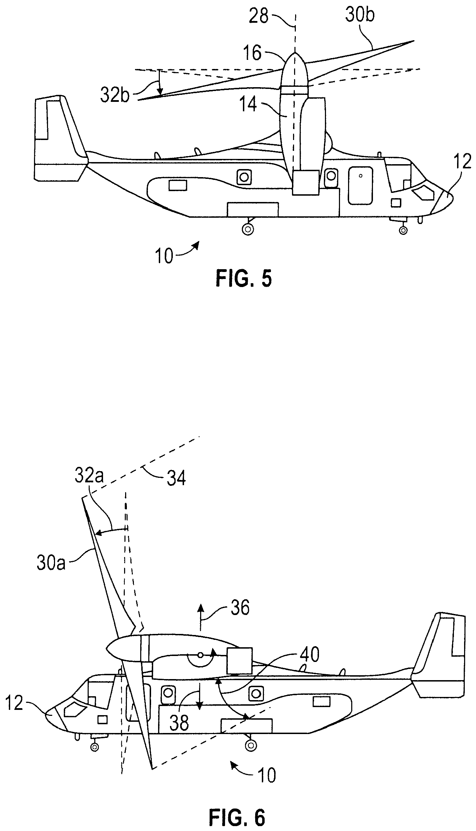

Referring again to FIG. 3, in normal hover flight a rotor tip path plane (TPP) 30, defined by rotation of the rotor 20 about the rotor axis of rotation 28 is substantially horizontal. To perform some maneuvers during operation of the aircraft 10, for example, rotation of the aircraft 10 about the yaw axis 26, cyclic pitch change is applied to each of the rotors 20 by a flight control system (not shown) based on pilot input. The cyclic pitch change has the effect of tilting the rotor TPP 30 in a selected direction to a selected angle. To yaw the aircraft 10 (view looking down on the aircraft 10 as in FIG. 3), a left side rotor TPP 30a is tilted to a first angle 32a, for example pitched downwardly (shown in FIG. 4), while a right side rotor TPP 30b is tilted to a second angle 32b (shown in FIG. 5) opposite to the first angle, for example, pitched upwardly. The result of this change in rotor TPPs 30a, 30b is that the aircraft 10 will yaw in a clockwise direction. To execute a yaw maneuver in the counterclockwise direction, the rotor TPP 30a and 30b changes are reversed.

Referring again to FIG. 4, changing the rotor TPP 30a results in a change to the direction of a rotor wake 34, which is always perpendicular to the rotor TPP 30a. The rotor wake 34 impacts the wing 14, at an angle of attack which generates a yaw opposing force 36 acting in a direction opposite a selected yaw direction 38, slowing the yaw rate and increasing an amount of change in the rotor TPP 30a to effect the selected net yaw force. To reduce the magnitude of the yaw opposing force 36, the wing 14 is configured to be compliant to the rotor wake 34 acting on the wing 14, and twists to reduce a wing angle of attack 40, relative to the rotor wake 34. The reduced wing angle of attack 40 reduces the magnitude of the yaw opposing force 36. In some embodiments, the twist is passive, a result of torsional flexibility of the wing 14 under the forces generated by rotor TPP 30a displacement, while in other embodiments, the twist is active and driven by actuators or other apparatus. In some embodiments, and amount of wing 14 twist is measured and communicated to the flight control system 42, to change the cyclic pitch command based on the amount of wing 14 twist that is measured.

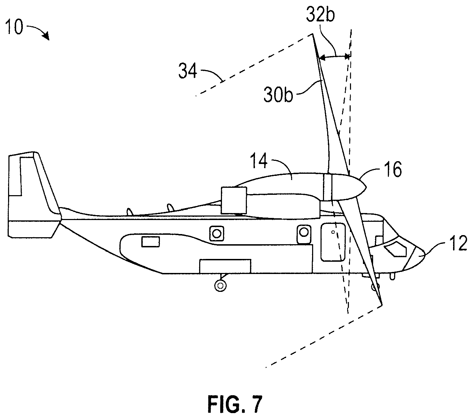

Similarly, referring now to FIG. 1, in normal airplane flight mode, the rotor tip path plane (TPP) 30 is substantially vertical. To roll the aircraft 10 while in airplane mode, cyclic pitch change is applied to each of the rotors 20 by the flight control system 42 based on pilot input. The cyclic pitch change has the effect of tilting the rotor TPP 30 in a selected direction to a selected angle. To roll the aircraft 10 (view looking aft as in FIG. 2), the left side rotor TPP 30a is pitched downwardly to the first angle 32a (shown in FIG. 6), while the right side rotor TPP 30b is pitched upwardly to the second angle 32b (shown in FIG. 7) opposite to the first angle, for example, pitched upwardly.

Referring again to FIG. 6, changing the rotor TPP 30a results in a change to the direction of the rotor wake 34, which is perpendicular to the rotor TPP 30a. The rotor wake 34 impacts the wing 14, which generates a roll opposing force 44 acting in a direction opposite a selected roll direction 46, slowing the roll rate and increasing an amount of change in the rotor TPP 30a to effect the selected yaw. To reduce the magnitude of the roll opposing force 44, the wing 14 twists to reduce the wing angle of attack 40, relative to the rotor wake 34. The reduced wing angle of attack 40 reduces the magnitude of the roll opposing force 44.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An aircraft (10) comprising:
a fuselage (12);
a wing (14) extending from each lateral side of the fuselage (12), wherein the wings (14) are configured to rotate relative to the fuselage (12) to transition the aircraft (10) from an airplane mode to a hover mode;
a rotor (20) secured to each wing (14), the rotor (20) having a rotor tip path plane (30) defined by rotation of the rotor (20) about a rotor axis of rotation (28);
a flight control system (42) configured to apply a cyclic pitch change to each of the rotors (20) based on pilot input;
wherein, when the rotor tip path plane (30) is changed relative to the rotor axis of rotation (28), the wing (14) is configured to twist to reduce an angle of attack (40) of the wing (14) relative to a rotor wake (34) of the rotor (20);
wherein the wing (14) is configured to twist in a same direction as the rotor tip path plane change; and
wherein the reduced angle of attack (40) of the wing (14) reduces a magnitude of a yaw or roll opposing force (36,44);
**characterized in that**
an amount of wing twist is communicated to the flight control system (42); and
the flight control system (42) adjusts the rotor tip path plane change based on the amount of wing twist.

2. The aircraft (10) of Claim 1, wherein a first rotor tip path plane (30a) of a first engine (16) is changed in a first direction and a second rotor tip path plane (30b) of a second engine (16) is changed in a second direction.

3. The aircraft (10) of Claim 2, wherein a first wing (14) twists in an opposite direction to a second wing (14).

4. The aircraft (10) of any of Claims 1 to 3, wherein the twist of the wing (14) is passively activated as a result of torsional flexibility of the wing (14); or
wherein the twist of the wing (14) is actively activated and driven by actuators or other apparatus.

5. The aircraft (10) of any of Claims 1 to 4, wherein rotation of the rotor (20) is driven by an engine (16) secured to the wing (14) and operably connected to the rotor (20).

6. A method of operating an aircraft (10) comprising a fuselage (12), a wing (14) extending from each lateral side of the fuselage (12), wherein the wings (14) are configured to rotate relative to the fuselage (12) to transition the aircraft (10) from an airplane mode to a hover mode, a rotor (20) secured to each wing (14), the rotor (20) having a rotor tip path plane (30) defined by rotation of the rotor (20) about a rotor axis of rotation (28), and a flight control system (42) configured to apply a cyclic pitch change to each of the rotors (20) based on pilot input, the method comprising:
changing the rotor tip path plane (30) orientation relative to the axis of rotation (28) of the rotor (20), the rotor (20) being secured to a wing (14)-of the aircraft (10);
twisting the wing (14) to reduce an angle of attack (40) of the wing (14) relative to a rotor wake (34) of the rotor (20); and
communicating an amount of wing twist to the flight control system (42);
wherein the wing (14) is twisted in a same direction as the rotor tip path plane change;
wherein the flight control system (42) adjusts the rotor tip path plane change based on the amount of wing twist; and
wherein the reduced angle of attack (40) of the wing (14) reduces a magnitude of a yaw or roll opposing force (36,44).

7. The method of Claim 6, further comprising:
changing a first rotor tip path plane (30a) of a first engine (16) in a first direction; and
changing a second rotor tip path plane (30b) of a second engine (16) in a second direction.

8. The method of Claim 7, wherein a first wing (14) is twisted in an opposite direction to a second wing (14).

9. The method of any of Claims 6 to 8, wherein the twist of the wing (14) is passively activated as a result of torsional flexibility of the wing (14); or wherein the twist of the wing (14) is actively activated and driven by actuators or other apparatus.

## Patentansprüche

1. Luftfahrzeug (10), umfassend:
einen Rumpf (12);
einen Flügel (14), der sich von jeder lateralen Seite des Rumpfes (12) erstreckt, wobei die Flügel (14) konfiguriert sind, um sich relativ zum Rumpf (12) zu drehen, sodass das Luftfahrzeug (10) von einem Flugzeugmodus in einen Schwebemodus übergeht;
einen Rotor (20), der an jedem Flügel (14) befestigt ist, wobei der Rotor (20) eine Rotorspitzenwegebene (30) aufweist, die durch Drehung des Rotors (20) um eine Rotordrehachse (28) definiert wird;
ein Flugsteuersystem (42), das konfiguriert ist, um eine zyklische Neigungsänderung auf jeden der Rotoren (20) basierend auf Piloteingabe anzuwenden;
wobei, wenn die Rotorspitzenwegebene (30) relativ zu der Rotordrehachse (28) geändert wird, der Flügel (14) konfiguriert ist, um sich zu verdrehen, um einen Angriffswinkel (40) des Flügels (14) relativ zu einer Rotorspur (34) des Rotors (20) zu reduzieren;
wobei der Flügel (14) konfiguriert ist, um sich in eine gleiche Richtung wie die Änderung der Rotorspitzenwegebene zu verdrehen; und
wobei der reduzierte Angriffswinkel (40) des Flügels (14) eine Größe einer Gier oder Rollen entgegengesetzten Kraft (36, 44) reduziert;
**dadurch gekennzeichnet, dass**
dem Flugsteuersystem (42) eine Menge an Flügelverdrehung kommuniziert wird; und
das Flugsteuersystem (42) die Änderung der Rotorspitzenwegebene basierend auf der Menge an Flügelverdrehung anpasst.

2. Luftfahrzeug (10) nach Anspruch 1, wobei eine erste Rotorspitzenwegebene (30a) eines ersten Motors (16) in einer ersten Richtung geändert wird und eine zweite Rotorspitzenwegebene (30b) eines zweiten Motors (16) in einer zweiten Richtung geändert wird.

3. Luftfahrzeug (10) nach Anspruch 2, wobei sich ein erster Flügel (14) in einer entgegengesetzten Richtung zu einem zweiten Flügel (14) verdreht.

4. Luftfahrzeug (10) nach einem der Ansprüche 1 bis 3, wobei die Verdrehung des Flügels (14) als Folge torsionaler Flexibilität des Flügels (14) passiv aktiviert wird; oder
wobei die Verdrehung des Flügels (14) aktiv aktiviert und durch Aktoren oder andere Vorrichtungen angetrieben wird.

5. Luftfahrzeug (10) nach einem der Ansprüche 1 bis 4, wobei Drehung des Rotors (20) durch einen Motor (16) angetrieben wird, der an dem Flügel (14) befestigt und mit dem Rotor (20) wirkverbunden ist.

6. Verfahren zum Betreiben eines Luftfahrzeugs (10), das einen Rumpf (12), einen Flügel (14), der sich von jeder lateralen Seite des Rumpfes (12) erstreckt, wobei die Flügel (14) konfiguriert sind, um sich relativ zum Rumpf (12) zu drehen, sodass das Luftfahrzeug (10) von einem Flugzeugmodus in einen Schwebemodus übergeht, einen Rotor (20), der an jedem Flügel (14) befestigt ist, wobei der Rotor (20) eine Rotorspitzenwegebene (30) aufweist, die durch Drehung des Rotors (20) um eine Rotordrehachse (28) definiert wird, und ein Flugsteuersystem (42) umfasst, das konfiguriert ist, um eine zyklische Neigungsänderung auf jeden der Rotoren (20) basierend auf Piloteingabe anzuwenden, wobei das Verfahren Folgendes umfasst:
Ändern der Ausrichtung der Rotorspitzenwegebene (30) relativ zu der Rotordrehachse (28) des Rotors (20), wobei der Rotor (20) an einem Flügel (14) des Luftfahrzeugs (10) befestigt ist;
Verdrehen des Flügels (14), um einen Angriffswinkel (40) des Flügels (14) relativ zu einer Rotorspur (34) des Rotors (20) zu reduzieren; und
Kommunizieren einer Menge an Flügelverdrehung an das Flugsteuersystem (42);
wobei der Flügel (14) in eine gleiche Richtung wie die Änderung der Rotorspitzenwegebene verdreht wird;
wobei das Flugsteuersystem (42) die Änderung der Rotorspitzenwegebene basierend auf der Menge an Flügelverdrehung anpasst; und
wobei der reduzierte Angriffswinkel (40) des Flügels (14) eine Größe einer Gier oder Rollen entgegengesetzten Kraft (36, 44) reduziert.

7. Verfahren nach Anspruch 6, ferner umfassend:
Ändern einer ersten Rotorspitzenwegebene (30a) eines ersten Motors (16) in einer ersten Richtung; und
Ändern einer zweiten Rotorspitzenwegebene (30b) eines zweiten Motors (16) in einer zweiten Richtung.

8. Verfahren nach Anspruch 7, wobei ein erster Flügel (14) in einer entgegengesetzten Richtung zu einem zweiten Flügel (14) verdreht ist.

9. Verfahren nach einem der Ansprüche 6 bis 8, wobei die Verdrehung des Flügels (14) als Folge torsionaler Flexibilität des Flügels (14) passiv aktiviert wird; oder
wobei die Verdrehung des Flügels (14) aktiv aktiviert und durch Aktoren oder andere Vorrichtungen angetrieben wird.

## Revendications

1. Aéronef (10), comprenant :
un fuselage (12) ;
une aile (14) s'étendant de chaque face latérale du fuselage (12), dans lequel les ailes (14) sont configurées pour tourner par rapport au fuselage (12) afin de faire passer l'aéronef (10) d'un mode avion à un mode stationnaire ;
un rotor (20) fixé à chaque aile (14), le rotor (20) ayant un plan de trajet de pointe de rotor (30) défini par la rotation du rotor (20) autour d'un axe de rotation de rotor (28) ;
un système de commande de vol (42) configuré pour appliquer un changement de pas cyclique à chacun des rotors (20) sur la base d'une intervention du pilote ;
dans lequel, lorsque le plan de trajet de pointe de rotor (30) est modifié par rapport à l'axe de rotation de rotor (28), l'aile (14) est configurée pour se tordre afin de réduire un angle d'attaque (40) de l'aile (14) par rapport à un sillage de rotor (34) du rotor (20) ;
dans lequel l'aile (14) est configurée pour se tordre dans une même direction que le changement de plan de trajet de pointe de rotor ; et
dans lequel l'angle d'attaque (40) réduit de l'aile (14) réduit l'intensité d'une force opposée en lacet ou en roulis (36, 44) ;
**caractérisé en ce que**
une valeur de torsion d'aile est communiquée au système de commande de vol (42) ; et
le système de commande de vol (42) ajuste le changement de plan de trajet de pointe de rotor sur la base de la valeur de torsion d'aile.

2. Aéronef (10) selon la revendication 1, dans lequel un premier plan de trajet de pointe de rotor (30a) d'un premier moteur (16) est modifié dans une première direction et un second plan de trajet de pointe de rotor (30b) d'un second moteur (16) est modifié dans une seconde direction.

3. Aéronef (10) selon la revendication 2, dans lequel une première aile (14) se tord dans une direction opposée à une seconde aile (14).

4. Aéronef (10) selon l'une quelconque des revendications 1 à 3, dans lequel la torsion de l'aile (14) est activée passivement en raison de la flexibilité en torsion de l'aile (14) ; ou
dans lequel la torsion de l'aile (14) est activée et entraînée activement par des actionneurs ou d'autres appareils.

5. Aéronef (10) selon l'une quelconque des revendications 1 à 4, dans lequel la rotation du rotor (20) est entraînée par un moteur (16) fixé à l'aile (14) et relié de manière opérationnelle au rotor (20).

6. Procédé de fonctionnement d'un aéronef (10) comprenant un fuselage (12), une aile (14) s'étendant à partir de chaque face latérale du fuselage (12), dans lequel les ailes (14) sont configurées pour tourner par rapport au fuselage (12) afin de faire passer l'aéronef (10) d'un mode avion à un mode stationnaire, un rotor (20) fixé à chaque aile (14), le rotor (20) ayant un plan de trajet de pointe de rotor (30) défini par la rotation du rotor (20) autour d'un axe de rotation de rotor (28) et un système de commande de vol (42) configuré pour appliquer un changement de pas cyclique à chacun des rotors (20) sur la base d'une intervention du pilote, le procédé comprenant :
la modification de l'orientation du plan de trajet de pointe de rotor (30) par rapport à l'axe de rotation (28) du rotor (20), le rotor (20) étant fixé à une aile (14) de l'aéronef (10) ;
la torsion de l'aile (14) pour réduire un angle d'attaque (40) de l'aile (14) par rapport à un sillage de rotor (34) du rotor (20) ; et
la communication d'une valeur de torsion d'aile au système de commande de vol (42) ;
dans lequel l'aile (14) est tordue dans une même direction que le changement de plan de trajet de pointe de rotor ;
dans lequel le système de commande de vol (42) ajuste le changement de plan de trajet de pointe de rotor sur la base de la valeur de torsion d'aile ; et
dans lequel l'angle d'attaque (40) réduit de l'aile (14) réduit l'intensité d'une force opposée en lacet ou en roulis (36, 44).

7. Procédé selon la revendication 6, comprenant en outre :
la modification d'un premier plan de trajet de pointe de rotor (30a) d'un premier moteur (16) dans une première direction ; et
la modification d'un second plan de trajet de pointe de rotor (30b) d'un second moteur (16) dans une seconde direction.

8. Procédé selon la revendication 7, dans lequel une première aile (14) est tordue dans une direction opposée à une seconde aile (14).

9. Procédé selon l'une quelconque des revendications 6 à 8, dans lequel la torsion de l'aile (14) est activée passivement en raison de la flexibilité en torsion de l'aile (14) ; ou
dans lequel la torsion de l'aile (14) est activée et entraînée activement par des actionneurs ou d'autres appareils.
